# EUROPEAN PATENT APPLICATION

(11) **EP 1 041 503 A1**
(43) Date of publication of application: **04.10.2000**
(21) Application number: 00201109.6
(22) Date of filing: 27.03.2000
(51) Int. Cl.: G06K 7/00

(54) **Rotary field receiver for magnetic identification system**

(30) Priority: 25.03.1999 NL 1011673
(71) Applicant: N.V. Nederlandsche Apparatenfabriek NEDAP, 7141 DC Groenlo (NL)
(72) Inventor: Kip, Harm Jacob, 7132 CS Lichtenvoorde (NL)
(74) Representative: Ottevangers, Sietse Ulbe

(57) **Abstract**

Receiver for an identification system, which utilizes a magnetic rotary field, in order to keep the "blind angles" small. By using a single sideband receiver (25), the system is insensitive to the additional phase shift that depends on the position of the label. Also described is a solution whereby a quadrature receiver (18) is used, to thereby determine label signals and also their phase, independently of the additional position-dependent phase shift. From the strength and phase of the label signals, the position of the label is determined.

## Description

This invention relates to an identification system for detecting at least one label which comprises a resonant circuit, comprising a transmitter for generating a transmitting signal, and a transmitting antenna configuration coupled to the transmitter, to which the transmitting signal is fed for generating an electromagnetic interrogation field which comprises a rotary magnetic field component, the identification system further comprising a receiver device for detecting at least one label which has been introduced into the interrogation field and of which a resonant circuit resonates in response thereto and thereby radiates a label signal, the label possibly further comprising means for modulating the resonant circuit with information such as identification information.

Such a system is known from EP 0 186 483. A problem with this system is that, according to an insight of the invention, the phase of the voltage induced in the label is dependent on the orientation of the label in the interrogation field. As a consequence, the phase difference between the transmitting signal and a label signal received by means of the receiver device is dependent on the orientation of the label. This may involve possible directions of orientation where reception of the label signal is not possible.

The invention provides a solution to *inter alia* this problem. Accordingly, the identification system according to the invention is characterized in that the receiver device is so designed that it generates a receiving signal which is insensitive to a phase difference between a received label signal and the transmitting signal. The receiving signal is then also insensitive to the orientation of the label and can always be properly received.

In applicant's WO 94/19781 a system is described in which several labels can be read out simultaneously. To that end, the system utilizes several small receiving antennas, each with their own receiving system. Due to the small antennas, little spatial averaging of the signals will occur, and the distance from label to receiving antenna is highly determinative of the received signal strength. Each receiver accordingly sees a weighted addition of the label signals. A self-learning algorithm provides for recovery of the original label signals.

A great problem with this method is that the strength of a label signal in the (small) receiving antennas is dependent not only on the distance between label and antenna, but also on the angle between label and H field.

The identification system according to the invention further provides the possibility of making a pronouncement, on the basis of the phase of the label signal, about the orientation of the label, so that the method of WO 94/19781 is improved considerably.

The invention will be further elucidated on the basis the drawing. The drawing comprises the following figures.
In Fig. 1 a rotary field transmitting antenna configuration according to the prior art (Curtis) is shown.
In Fig. 2 the improved rotary field transmitting antenna configuration according to the prior art (Rebers) is shown.
In Fig. 3 the simplified control of a rotary field transmitting antenna configuration according to Rebers is shown.
In Fig. 4 the vector representation of the label signal as a result of absorption modulation is shown.
In Fig. 5 the vector representation of the transmitting signal with label signal is shown.
In Fig. 6 the vector representation of the transmitting signal with label signal with a phase difference between the two is shown.
In Fig. 7 schematically a first embodiment of an identification system according to the invention is shown.
In Fig. 8 schematically a second embodiment of an identification system according to the invention is shown.
In Fig. 9 schematically a third embodiment of an identification system according to the invention is shown.

The invention relates to the reading apparatus of a magnetic identification system. Such a system works with one or more labels, whose code content is read out wirelessly.

In a common modern design, an identification label is in the form of a credit card, in which a coil and an integrated circuit are incorporated. As soon as the label is introduced into a sufficiently strong magnetic field, the chip is activated, and starts to radiate its code content by means of absorption modulation. The reading apparatus must generate this magnetic field, and receive and process the signals radiated by the label. To make the chip work, a minimum magnetic field strength is needed. Depending on the design and size of the label coil and on chip sensitivity, threshold values for the magnetic field strength which are common in practice are between 0.25 and 1 A/m in the label plane.

Of course, this value of the field strength is needed in the direction of the normal to the label. This means that in many cases, upon a minor turning of the label, the field strength falls below the threshold value, which makes detection impossible. In many applications, these blind angles are highly undesirable.

A solution to this problem has previously been indicated by Curtis (EP A 0 186 483, SENELCO).

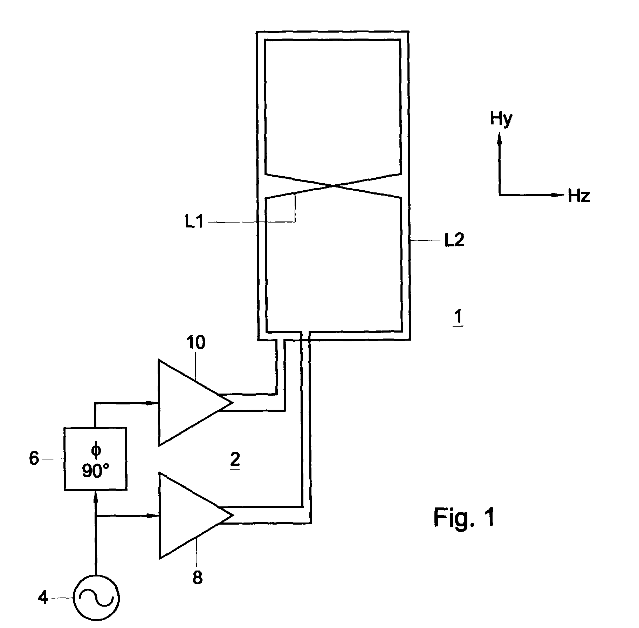

In Fig. 1 it is shown that Curtis generates a rotary field by combining an O-shaped loop antenna L2, which provides the horizontal Hₓ field component, with an 8-shaped loop antenna L1, which generates especially the vertical H_{y} field component. The antenna configuration 1 formed by the two loop antennas is connected with a transmitter device 2, which comprises an oscillator 4, a 90 degree phase shifter 6 and two amplifiers 8, 10. By driving the two loop antennas L1, L2 with a phase difference of 90 degrees, a rotary field is generated centrally opposite the antenna configuration. This is to say that the field vector itself has a constant amplitude, but that the direction changes with the field frequency. The field component in the direction of the normal to the label has thus become independent of the orientation of the label. Of course, this holds true only as long the normal to the label is disposed in the x y plane, and with an equal value for | Hₓ | | H_{y} |

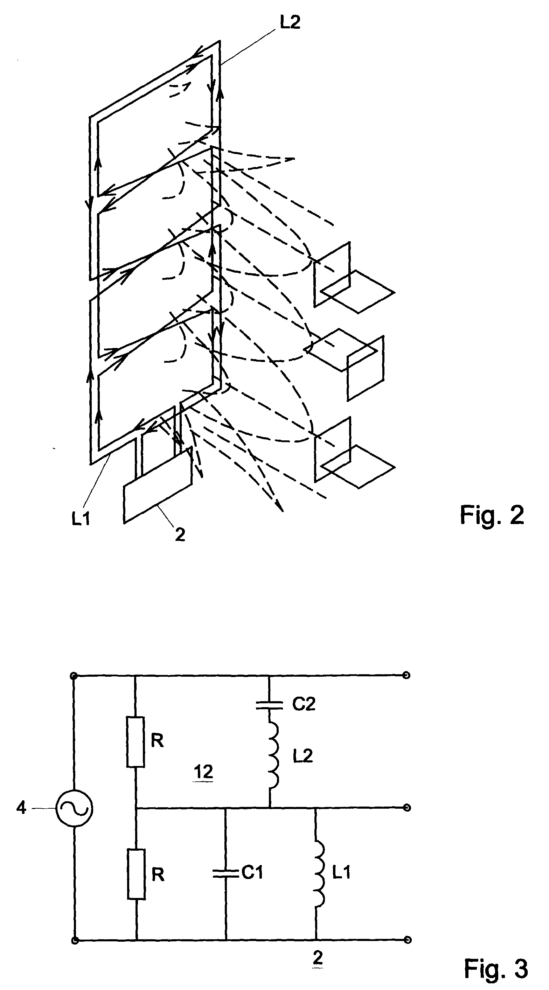

A drawback of this antenna construction is that the horizontal component (that of the O antenna) works up to a large distance. To still meet the limiting values applying at a distance of 10 m, the field strength close to the antenna cannot be very high. An antenna construction as proposed by Rebers (EP 0 645 840, NEDAP) with a 3-loop loop antenna L2 - instead of the O-loop antenna L2 - is a better solution to this problem (see Fig. 2). Moreover, now more areas with a rotary field are created. The contents of the patent application of Rebers are incorporated in the present application by reference.

Curtis uses separate end stages 8, 10 for the two antenna coils and provides the 90 degree phase shift 6, prior to the output amplifiers 8, 10.

A considerable simplification in the antenna drive is described by Rebers (EP 0579332, Nedap; see also Fig. 3). Therein, the transmitter device 2 comprises an oscillator 4 with an output amplifier, and a phase shifting network 12, coupled to the oscillator. This patent application of Rebers is incorporated in the present application by reference. In it, the loop antennas L1, L2 themselves form part of the phase shifting network 12, so that only one output amplifier 4 is needed for the control of the two loop antennas L1, L2.

For a proper understanding, it is necessary to consider for a moment the phase behavior of an absorption modulation system. In a non-rotary field antenna, the transmitting coil generates a primary magnetic field which is in phase with the current through the antenna. The induced voltage in the label is shifted 90 degrees with the primary magnetic field. In the label, a resonant circuit is included; when properly tuned, the current in the label is in phase with the induced voltage. This current produces, without phase shift, a secondary magnetic field. The induction voltage thereby generated in the transmitting/receiving antenna is shifted 90 degrees again, and is eventually in opposite phase to the primary antenna current. The receiver "sees" the vector addition of the transmitting signal and the label signal.

Damping the resonant circuit in the label leads to a decrease of the amplitude of the current in the coil, and hence the second magnetic field generated by this current. The phase of the current in the coil will also change to some extent. This effect is further left unconsidered here.

Due to the changing current in the circuit, an amplitude modulation is created.

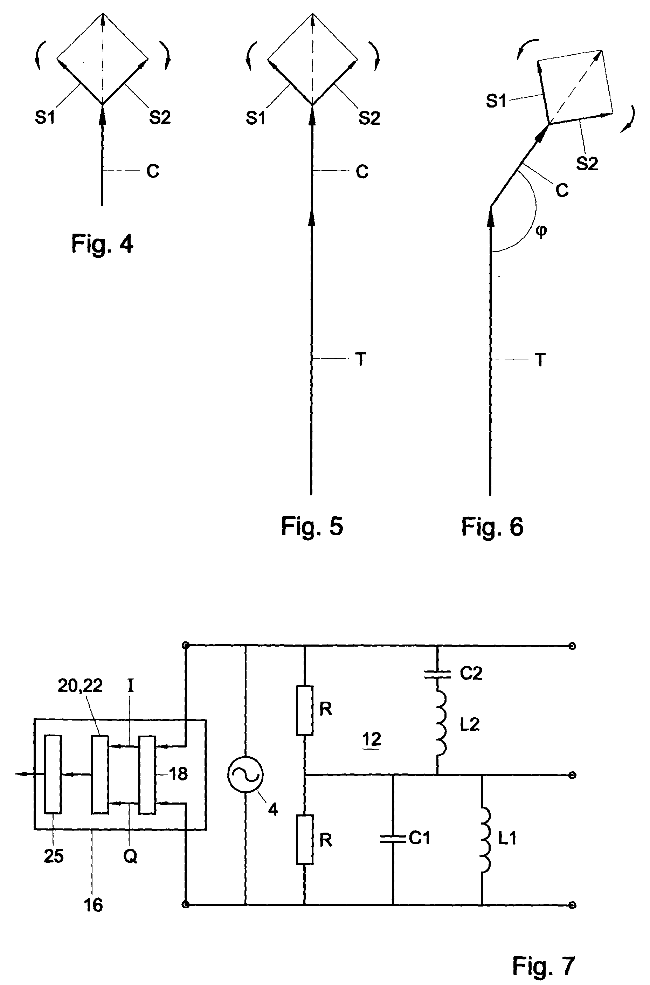

In Fig. 4 the vector representation of this is represented. The two sidebands can be represented by vectors S1, S2 rotating counter to each other, on top of the carrier vector C.

In Fig. 5 the signal T radiated by the interrogating transmitter is drawn as well. The scale is not linear; in general, the interrogation signal is very much stronger than the label signals. Given a correctly set system, the vector representation of the voltage on the antenna coil also looks as drawn in Fig. 5.

The amplitude modulation of the label signal is to be found on the top of the composite signal. Accordingly, traditional receivers often consist of a simple top detector with the necessary filtering behind it. Due to the large amplitude of the transmitting signal, a top detector behaves as a synchronous detector.

Due to production tolerances, or by detuning, for instance in that metal is present at the coil, there may also arise a phase shift between transmitting signal and return signal of the label. A tuned circuit with a Q of 20 gives a phase shift of 45 degrees when mistuning is 2.5%. Through this additional phase shift, a top detector will not work properly anymore.

In the vector diagram of Fig. 6, this additional phase shift is indicated by the angle φ. It is clear that if this angle becomes 90 degrees, a top detector gives no result anymore. To be able still to detect label signals, various solutions have been conceived, an adjustable sample port, such as used in the Philips transmitter/receiver chip of type number HTRC110, or an adapted quadrature detector, such as described by Einfeldt (EP 794501, Philips).

Einfeldt does not describe rotary fields; he wants a reliable information transfer under unfavorable conditions. Precisely to ensure that detection of a label is less dependent on the position of the label, the use of a rotary field is favorable.

Close to the antenna, the H field is always perpendicular to the flow direction. This follows directly from one of the Maxwell equations, since, neglecting the displacement current, rot H = I. A consequence of this is that if a label without rotating moves along an antenna coil, the field direction at the location of the label changes constantly. In practical situations, this change will occur in only 2 dimensions. When using a so-called Maxwell array as antenna, in the area between the antenna coils a strong field deformation will arise, so that a label moving through it will undergo many different field directions. However, when using a vertical O antenna, especially the vertical field component is absent. That is to say that a label that is held horizontally has a slight chance of being detected. By also providing a vertical field component, this can be improved considerably.

In a preferred embodiment, a 2- and 3-loop antenna are arranged in one plane (see Fig. 2). In the middle, in front of the loops, there is an area where the horizontal and vertical field components are equally strong. Due to the 90 degree phase difference, a rotary field vector is created, with a constant amplitude, and rotating in a plane perpendicular to the antenna construction. At some distance from this middle, the direction and also the magnitude of the field components will change, the circular form in which the H field vector rotates becomes an ellipse, and the plane in which the H field vector rotates, rotates also.

Upon rectilinear movement of a label through this field, the chance of blind angles is very slight.

As for the return signal of the label, however, the rotary field has given rise to a complication.

Because the H field vector rotates, the phase of the voltage induced in the label is determined entirely by the orientation of the label. The phase difference between received label signal and transmitting signal can have any value between 0 and 360 degrees. Moreover, upon rotation of the label, this phase difference will change each time. The traditional top detector will not function properly here.

Curtis ignores the receiver problem completely. In the rotary fields of Rebers, the starting point is a system where the frequency sweeps, so that the phase also changes continuously, and this problem does not exist.

The invention provides a solution to this rotary field reception problem.

In applicant's WO 94/19781 a system is described in which several labels can be read out simultaneously. To that end, the system utilizes several small receiving antennas, each with their own receiving system. Due to the small antennas, little spatial averaging of the signals will occur, and the distance from label to receiving antenna is highly determinative of the received signal strength. Each receiver accordingly sees a weighted addition of the label signals. A self-learning algorithm provides for recovery of the original label signals.

A great problem in this method is that the strength of a label signal in the (small) receiving antennas is dependent not only on the distance between label and antenna, but also on the angle between label and H field.

The invention provides a method for making a pronouncement, on the basis of the phase of the label signal, about the orientation of the label, so that the method of WO 94/19781 is improved considerably.

A preferred embodiment of an identification system according to the invention comprises an antenna configuration L1, L2 as shown in Fig. 2. For the operation of this antenna configuration, reference is made to EP 0 645 840. In it, the 8-shaped loop antenna L1 and the 3-loop loop antenna L1 are arranged in one plane. Further, there is no magnetic coupling between the two antennas. The loop antennas L1, L2 are preferably driven with a 90 degree phase shifting network according to Fig. 7 which is identical to Fig. 3. For the operation of the phase shifting network, reference is made to EP 0 579 332 of Rebers. The contents of that patent application are understood to be incorporated in the present patent application. In the middle, opposite the loop antennas L1, L2, a rotary field can thus be realized. The H field vector rotates 360 degrees with the frequency of the alternating voltage applied. In a label in this rotary field, an induction voltage will be generated, whose phase is dependent on the angle which the label makes with the horizontal plane. Upon resonance, there is no phase shift between the induced voltage and the current that starts to flow in the label coil. Accordingly, the secondary field generated by the label will also have the same phase as the voltage induced. The label can now be considered as a magnetic dipole, and will generate an induction voltage U2 in the 3-loop loop antenna L2 coil, and also an induction voltage U1 in the 8-shaped loop antenna L1. These two components U1, U2 of the received label signal have no mutual phase difference, but there is a phase difference with the transmitting signal that depends on the orientation of the label. In other words, the phase difference between the received label signal U1, U2 on the one hand and the transmitting signal generated by the oscillator 4 on the other is dependent on the orientation of the label in the interrogation field. Because loop antennas L1, L2 are mutually coupled in the phase shifting network 12 according to Fig. 7, the two components U1, U2 will be added with a 90 degree phase difference in the phase shifting network 12.

Due to these two components U1, U2, the signal that is presented to a receiver 16 of the identification system of Fig. 7 can be considered as a real signal with a phase angle of 45 degrees. A quadrature detector 18 of the receiver 16 takes this phase difference into account, and thus attains a signal gain of 3 dB. By vectorially adding the I and Q signals, after the quadrature mixing stage 18, in an adder 20 of the receiver 16, the original modulation appears again. The output signal of the adder 20 can then be added to a single sideband detector 25 which forms part of the receiver 16. The single sideband detector 25 then generates the eventual receiving signal. The single sideband detector can be designed as a single sideband detector known per se. The embodiments of the single sideband receiver to be discussed hereinafter (filter method, weaver method and phase method) can also be utilized. The receiver device thus formed by the receiver 16 and phase shifting network 12 is insensitive to the relative phase of the label signal, and hence to the orientation of the label. Further, the receiver 16 can further comprise means for determining the orientation of the label on the basis of the phase difference between the I signal and the Q signal of the single sideband detector when it comprises a quadrature detector.

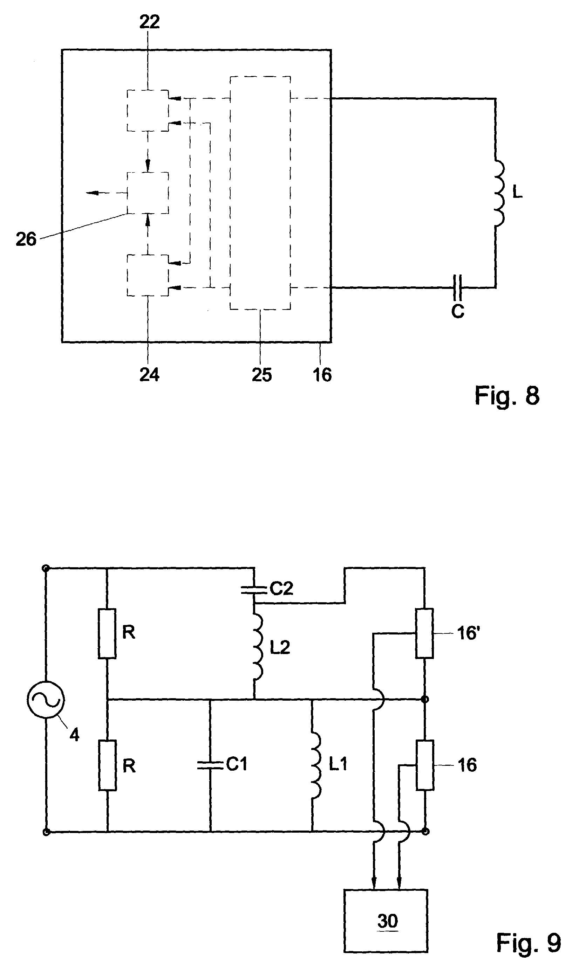

A second preferred embodiment of an identification system utilizes a single sideband receiver 16, generally known in itself, directly on the lower or upper sideband of the label signal (Fig. 8). The interrogation field can then be generated with the transmitter device according to, for instance, Figs. 1, 2 or Fig. 7, with the receiver 16 then being omitted in Fig. 7. Fig. 8 shows only the receiver device which is provided with a receiving antenna configuration L, C and a receiver 16 connected therewith. Here, then, only one of the two rotary sideband vectors from Fig. 6 is used, and not the resultant which is nulled upon 90 degree phase shift. A possible realization of the receiver 16 utilizes the filter method. Another embodiment is a single sideband receiver 16 according to the Weaver method. This can be used here too. By giving one of the signals a phase shift of 90 degrees in a quadrature detector 25, it is simple to determine by addition (in adder 22 to obtain (I+Q)) and subtraction (in difference former 24 to obtain (I-Q)) the lower and upper sideband, respectively, of the label signal, independently of each other. This is the so-called phase method. For further signal processing, the better one of the two sidebands can be chosen using means 26 known per se. This is especially important if one of the sidebands lies in a band which is also utilized by other services. Especially radio services can seriously disturb one of the sidebands.

Naturally, the better sideband can also be chosen automatically. There are existing techniques for this purpose, as well as for the further signal processing. A large part of the further signal processing proceeds digitally. Further, the receiver 16 may further comprise means for determining from the phase difference between the I signal and the Q signal the orientation of the label relative to the interrogation field.

A third embodiment (Fig. 9) utilizes separate quadrature receivers 16, 16' on the two loop antennas L1, L2. The transmitting and receiving antenna configuration is made of shared design, such as this has also been discussed with reference to Fig. 7. The control of the coils L1,L2 has also been adapted, so that no coupling between the two arises. As a consequence, the relative phase and strength of the two signals U1, U2 can be determined separately. This information is used in a signal combination unit 30 to read out several labels simultaneously. In combination with additional receiving systems, this can be further improved. Also, the position of the labels can be determined from this. Especially the correction of the various signal strengths for the angular displacement of the labels gives a great improvement over the method according to WO 94/19781.

The invention is not limited to the embodiments outlined hereinbefore. Thus, the phase shifting network in each of the above-outlined embodiments can be replaced by the rotary field network such as this is described in EP 0 762 355. That application is likewise understood to be incorporated into the present patent application. Further, in each of the above-outlined embodiments of Figs. 7 and 9, the oscillator can be omitted. The loop antennas L1, L2 can then be driven with other means for generating a rotary interrogation field. Also, it is possible that the rotary interrogation field is generated with an entirely different antenna configuration, as discussed with Fig. 8. The oscillator is then omitted too, leaving only the receiver device.

## Claims

1. An identification system for detecting at least one label which comprises a resonant circuit, comprising a transmitter for generating a transmitting signal and a transmitting antenna configuration coupled to the transmitter, to which the transmitting signal is fed for generating an electromagnetic interrogation field which comprises a rotary magnetic field component, the identification system further comprising a receiver device for detecting at least one label which has been introduced into the interrogation field and of which a resonant circuit resonates in response thereto and thereby radiates a label signal, the label possibly further comprising means for modulating the resonant circuit with information such as identification information, characterized in that the receiver device is so designed that it generates a receiving signal which is insensitive to a phase difference between a received label signal and the transmitting signal.

2. An identification system according to claim 1, characterized in that the receiver device comprises a single sideband detector.

3. An identification system according to claim 1 or 2, characterized in that the receiver device comprises a receiver and a receiving antenna configuration coupled thereto which comprises a phase shifting network in which a first and a second loop antenna are included, while the phase shifting network adds up signals received by the first and second loop antenna, shifted in phase, for obtaining a composite signal which is fed to the receiver.

4. An identification system according to claim 3, characterized in that the receiver comprises a quadrature detector which takes into account the phase difference with which in the phase shifting network the signals received by means of the first and second loop antenna have been added up.

5. An identification system according to claim 2 and 4, characterized in that the receiver further comprises an adder to which an I- and Q-output signal of the quadrature detector are fed for vectorially adding the I- and Q-output signal for recovering a modulation of the label, while the recovered modulation is fed to the single sideband detector.

6. An identification system according to any one of claims 3-5, characterized in that the receiving antenna configuration and the transmitting antenna configuration are one and the same antenna configuration, while the transmitting signal is fed to the phase shifting network, which phase shifting network drives the first and second loop antenna shifted approximately 90 degrees in phase relative to each other, for generating the electromagnetic interrogation field.

7. An identification system according to claim 2, characterized in that the single sideband receiver is of a type that works according to the filter method.

8. An identification system according to claim 2, characterized in that the single sideband receiver is of a type that works according to the Weaver method.

9. An identification system according to claim 2, characterized in that the single sideband receiver is of a type that works according to the phase method.

10. An identification system according to claim 9, characterized in that the single sideband receiver comprises a quadrature detector.

11. An identification system according to any one of claims 2 or 7-10, characterized in that the single sideband receiver is adapted for detecting two mutually different single sidebands separately from each other.

12. An identification system according to claim 11, characterized in that the receiver device further comprises means for selecting a better one of the two sidebands in a manner known per se.

13. An identification system according to claim 1 or 2, characterized in that the receiving antenna configuration comprises a first and a second loop antenna, while the receiver comprises a first and second quadrature detector which are respectively connected with the first and second loop antenna.

14. An identification system according to claim 13, characterized in that the system further comprises means for processing in combination signals which have been obtained by means of the first and second quadrature detector for obtaining information about the modulation of more labels and/or the position of labels on the basis of phase differences and strength differences between these signals.

15. An identification system according to claim 13 or 14, characterized in that the transmitting antenna configuration and the receiving antenna configuration consist of one and the same antenna configuration, the antenna configuration comprising a phase shifting network to which the transmitting signal is fed, while the phase shifting network is so arranged that the first and second loop antenna are driven while shifted 90 degrees relative to each other.

16. An identification system according to claim 10 or 14, characterized in that the receiver device further comprises means for determining the orientation of a label from the output signals of the quadrature detector.

17. An identification system with a rotary field antenna, in which the detection quality is independent of the spatial orientation of the label, characterized in that the receiver is insensitive to the position-dependent phase shift occurring in the label.

18. An identification system according to claim 17, characterized in that for this purpose a single sideband receiver is used.

19. An identification system according to claim 17, characterized in that for this purpose a quadrature detector in the receiver is used.

20. An identification system according to claim 17, characterized in that by the use of the quadrature detector the phase shift which arises in the reception path through the coupling network between the two antennas is anticipated, so that a better signal to noise ratio is obtained.

21. An identification system according to claim 19, characterized in that the position of the label is determined from the phase difference between I and Q signal of the quadrature detector.

22. An identification system according to claim 17, characterized in that the strength of the horizontal and vertical component of the label signal, and their phase, are used to determine the position of the label.
